# EUROPÄISCHE PATENTSCHRIFT

(11) **EP 1 663 719 B1**
(45) Veröffentlichungstag und Bekanntmachung des Hinweises auf die Patenterteilung: **14.01.2009**
(21) Anmeldenummer: 04766327.3
(22) Anmeldetag: 27.07.2004
(51) Int. Cl.: B60R 16/02, H02J 1/14, H02J 13/00

(54) **VERFAHREN ZUR STEUERUNG VON ENERGIESTRÖMEN**
METHOD FOR CONTROLLING A POWER FLOW
PROCEDE POUR COMMANDER DES FLUX D'ENERGIE

(30) Priorität: 09.09.2003 DE 10341838
(43) Veröffentlichungstag der Anmeldung: 07.06.2006
(73) Patentinhaber: Continental Automotive GmbH, 30165 Hannover (DE)
(72) Erfinder: NENNO, Rudolf, 78054 Villingen-Schwenningen (DE); WOLF, Jürgen, 60314 Frankfurt am Main (DE)
(86) Internationale Anmeldenummer: PCT/EP2004/051617
(87) Internationale Veröffentlichungsnummer: WO 2005/025941

(56) Entgegenhaltungen:
- EP-A- 1 244 191
- WO-A-96/11817
- US-B1- 6 212 198
- MILLER J M ET AL: "Current status and future trends in More Electric Car power systems" VEHICULAR TECHNOLOGY CONFERENCE, 1999 IEEE 49TH HOUSTON, TX, USA 16-20 MAY 1999, PISCATAWAY, NJ, USA,IEEE, US, 16. Mai 1999 (1999-05-16), Seiten 1380-1384, XP010342161 ISBN: 0-7803-5565-2

## Beschreibung

Die Erfindung betrifft ein Verfahren zur Steuerung von Energiequellen oder Energiesenken an einem Energieakkumulator in einem Kraftfahrzeug, wobei mindestens ein den Ladezustand des Energieakkumulators charakterisierender Parameter gemessen wird, wobei der den Ladezustand des Energieakkumulators charakterisierende Parameter an eine Steuereinheit übermittelt wird, wobei die Steuereinheit in Abhängigkeit von dem den Ladezustand des Energieakkumulators charakterisierenden Parameter mindestens ein Steuersignal generiert, welches direkt oder indirekt mit dem Energieakkumulator verbundene Energiesenken oder Energiequellen hinsichtlich ihrer aus dem Energieakkumulator aufgenommenen oder an den Energieakkumulator abgegebenen Leistung steuert. Daneben ist eine Vorrichtung zur Durchführung des Verfahrens Gegenstand der Erfindung.

Der Gegenstand der Erfindung findet hauptsächlich auf dem Gebiet der Automobiltechnik Einsatz, wobei in der Folge die Begriffe Energieakkumulator und Batterie beziehungsweise Autobatterie synonym benutzt werden.

Elektrische Kupplungen, elektrisch betriebene Hubrampen, Windenmotoren, Driye-by-Wire Steuerungen, Stear-by-Wire Steuerungen, elektrische Retarderunterstützungen, Automotive Bilderkennungssysteme, Radarsensorische Systeme, Informationssystemmodule zur Organisation der Entladung und Beladung von Nutzfahrzeugladungen auf Fuhrparkgeländen und diverse weitere elektrisch arbeitende Systeme unterstützen den Fahrer bei der Bewältigung seiner Aufgaben. Die Vielzahl dieser elektronischen Informations-, Steuer- und Ladesysteme, die zunehmende Elektrifizierung ehemalig mechanischer Fahrhilfen und Ausstattungen und die zunehmend stärkere Motorisierung mit entsprechend größer ausgelegten Starthilfen benötigen eine große Menge elektrischer Energie und haben so direkten Einfluss auf die Lebensdauer von Autobatterien. Bei solchen Fahrzeugen bedeutet demzufolge ein Mangel in der batteriegespeisten Energieversorgung auch eine drastische Zunahme des Pannenrisikos. Fahrzeuge mit hohem Pannenrisiko, insbesondere Nutzfahrzeuge, genügen nicht den Anforderungen nach einem hohen Mobilitätsgrad und sind nur eingeschränkt einsetzbar. Verschiedene Vorrichtungen und Verfahren zur Optimierung des Ladezustandes und somit auch der Lebensdauer von Autobatterien sind bereits bekannt und werden derzeit vereinzelnd in PKW eingesetzt. Beispielsweise werden Batterien mit Sensoren und Aktoren ausgestattet, die deren Eigentemperatur bei Kälte nachregeln. Hierdurch erhöhen sich die Geschwindigkeiten der chemischen Reaktionen und die Batterie kann binnen kürzerer Zeit nachgeladen werden. Auch sind so genannte integrierte Batteriediagnosesysteme bekannt, die als kleine elektronische Baugruppe direkt in die Batterie integriert werden und die Lebensdauer der Batterie verlängern.

Keines der vorgenannten Systeme beseitigt jedoch die Ursache der Verfügbarkeitseinschränkungen von Energieakkumulatoren und die damit verbundenen hohen Kosten aufgrund von Ausfällen selbiger.

Aus der internationalen Patentanmeldung WO 96/11817, der Veröffentlichung "Current status and future trends in More electric Car power systems" (J. M. Miller et al., 16.05.1999) und der europäischen Patentanmeldung EP 1 244 191 A2 sind bereits Energiemanagementsysteme für Kraftfahrzeuge bekannt, die den Ladezustand einer Batterie ausgehend von mindestens einem Überwachungsparameter der Batterie überwachen und gegebenenfalls Maßnahmen an Verbrauchern oder Energiequellen veranlassen. Ein diesen Systemen gemeinsamer Nachteil liegt darin, dass die vorgeschlagenen Verfahren im Wesentlichen nur den gemessenen Ladezustand der Batterie bei der Optimierung der Energieströme berücksichtigen und theoretisch mögliche Belastungskollektive für die Batterie nicht genutzt werden können.

In diesem Zusammenhang hat es die Erfindung sich zur Aufgabe gemacht, ein Verfahren der eingangs genannten Art aufzuzeigen, welches einen möglichst optimalen, ausfallsicheren Betrieb eines Energieakkumulators, insbesondere einer Autobatterie gewährleistet. Daneben ist eine Vorrichtung zur Durchführung des Verfahrens Gegenstand der Erfindung.

Die Aufgabe wird erfindungsgemäß mittels des Gegenstandes des ersten Anspruchs beziehungsweise des Anspruchs 8 gelöst. Die jeweils abhängigen Unteransprüche zeigen vorteilhafte Ausgestaltungen und Weiterbildungen der gefundenen Lösung.

Der Ladezustand der Batterie hängt nicht nur von Batteriekenndaten, sondern auch von vielen weiteren Faktoren ab.
Neben den Batteriekenngrößen, den Säurewerten der Batterie, bestimmen auch die Verbraucherleistungen, die Ladespannung, die dynamischen Systemkennlinien und die Art des Fahrzeugeinsatzes die Lebensdauer der Batterie und damit auch die Pannensicherheit des Fahrzeuges.

Das derzeit in allen Fahrzeugen implementierte zentrale Element zur Erfassung vieler für den Ladezustand der Batterie relevanter Parameter wie Bordspannung, Drehzahl, Geschwindiqkeit, Temperaturen, etc., sowie zur Steuerung vieler elektrischer Verbraucher, ist die Instrumentierungseinheit, hier kurz Kombiinstrument genannt. Der hier zusammenlaufende Informationsfluss, kombiniert mit der Möglichkeit Parameter der systeminternen Energieströme zu steuern, eignet sich besonders für eine Integration des in dieser Erfindung aufgezeigten Verfahrens. Der sich durchsetzende Trend, einzelne Sys temkomponenten im Fahrzeug zu modularisieren und mit universellen Netzwerken, wie z.B. CAN, RS485, LON oder K-Line zu verbinden, eröffnet sowohl die Möglichkeit weiterer Konzentration von Funktionalität in das Kombiinstrument, als auch der zentralen Beeinflussung nahezu aller Systemkomponenten und Verbraucher im Fahrzeug. Auch nicht leitungsgebundene Verbindungen, wie beispielsweise Bluetooth, ermöglichen erfindungsgemäß die Steuerung von nicht standardmäßig verkabelten, beispielsweise nachgerüsteten Komponenten. Aufgrund der zentralen Implementierung von Funktionalitäten in einer Steuereinheit kann ein Teil der sensiblen Elektronik wegfallen, wodurch die Zuverlässigkeit und Lebensdauer des Gesamtsystems ansteigt.

Ein weiterer Vorteil der Erfindung liegt in der Nutzung von Kriterien, die eine Adaption des Verfahrens und seiner implementierten Routinen an unterschiedliche Energiesenken und Energiequellen, wie z.B. verschiedene Batterietypen, erlauben, so dass eine möglichst große Einsatzvielfalt gewährleistet werden kann. Neben der automatischen Steuerung durch das System ist weiterhin ein aktives, bewertendes manuelles Eingreifen in das Gesamtsystem möglich, mit dem ein Abgleich auf unterschiedliche, das Fahrzeug und dem Fahrverlauf betreffende Situationen und Eigenschaften durchführbar ist.

Mit Vorteil nutzt eine vorteilhafte Weiterbildung der Erfindung Vorrichtungen und Verfahren zur Auswertung und Steuerung von fahrerrelevanten, transportlogistischen oder fahrzeugrelevanten Daten, wobei beispielweise als Vorrichtungen oder Verfahren so genannte Generatorregler, elektronische Batteriewärme-Managementsysteme, Temperatursensoren für Batterie und Motorraum, Säuredichtemesser für Batterien, Sensoren und Aktoren für Energiequellen und Energiesenken, Routenplaner, Detektoren zur Erfassung von Systemkennlinien, Systeme zur Steuerung des Zünd- und Einspritzsystems (Motorsteuerung), und Systeme zur Steuerung logistischer Abläufe im PKW- und Nutzfahrzeugverkehr zum Einsatz kommen können.

Zur weiteren Verdeutlichung seien die wichtigsten der oben genannten Vorrichtungen und Verfahren im Folgenden kurz erläutert beziehungsweise definiert.

Der Generatorregler gleicht die durch Drehzahl- und Belastungsschwankungen hervorgerufenen Spannungsunterschiede aus.

Batteriewärme-Managementsysteme ermitteln mittels einer im Batteriegehäuse befindlichen Mess- und Regeleinheit die Temperatur der Batterie und regeln diese nach.

Säuredichtemesser für Batterien bestimmen die Säuredichte und Säureschichtung der Batterien.

Säureregler gleichen chemisch ungleiche Zustände aus. Verbrauchsmesser und verbrauchssteller für verbraucher im Fahrzeug ermitteln und steuern den energetischen und zeitlichen Verlauf von Dauerverbrauchern, Langzeitverbrauchern und Kurzzeitverbrauchern.

Detektoren erfassen an der Batterie das Zusammenwirken von Batterie, Generator, Verbraucher, Temperatur, Drehzahl und Übersetzung Motor zu Generator und übermitteln eine dieses System beschreibende Kennlinie.

Systeme zur Steuerung des Zünd- und Einspritzsystems oder Motormanagementsysteme, wie beispielsweise die Motronic-Systeme, übernehmen die Erfassung und Steuerung aktueller Motorbetriebsdaten. Sie kommunizieren mit anderen Fahrzeugsteuergeräten.

Systeme zur Steuerung von einzelnen LKW und LKW-Flotten, so genannte WapLog-Systeme, analysieren die Prozesse der Transportlogistik. Die Abläufe in Unternehmen mit in der Regel unterschiedlichen Verkehrsarten werden in einer Datenbank hinterlegt. Je nach konkreter Anwendung wird ein zutreffendes Modell aktiviert, worin die Details der Arbeitsprozesse und des aktuellen Auftrages erfasst sind, so dass der Fahrer schrittweise mittels eines, über ein Wireless Application Protokoll, kurz WAP genannt, auf dem General Packet Radio Service, kurz GPRS genannt, basierenden Informationssystems, mittels Mobilfunk durch seinen Fahrverlauf geführt wird.

Die Batterietemperatur, bei der der Motor noch gestartet werden kann, hängt vom Mindestladezustand der Batterie ab.

Die Stromabgabe des Generators ist drehzahlabhängig. Ist der Verbraucherstrom größer als der Generatorstrom, z. B. bei Motorleerlauf, entlädt sich die Batterie und die Spannung im Bordnetz sinkt.

Die dem Generator angebotene Drehzahl hängt vom Einsatz des Fahrzeuges, wie Berufsverkehr, Autobahnfahrten, Stadtfahrten, etc. ab.

Die Verbraucherleistungen werden durch die elektrischen Verbraucher bestimmt. Im Fahrzeug bestehen diese aus Dauerverbrauchern (Zündung, Kraftstoffeinspritzung, etc.), Langzeitverbrauchern (Beleuchtung, Bremslicht, etc.) und Kurzzeitverbrauchern (Blinklicht, Bremslicht, etc.) und haben unterschiedliche Einschaltdauern. Sie sind teilweise jahreszeit-abhängig (Klimaanlage, Sitzheizung) oder fahrbetriebsabhängig (Kühlventilatoren).

Die Ladespannung muss mit Rücksicht auf die chemischen Vorgänge in der Batterie variieren. Kälte fordert eine hohe Ladespannung, wärme eine niedrigere.

Das Zusammenwirken von Batterie, Generator, Verbraucher, Temperatur, Drehzahl und Übersetzung Motor zu Generator wird durch die Systemkennlinie beschrieben. Sie ändert sich dyna misch je nach Betriebsbedingung des Fahrzeuges.

Die Säurewerte der Batterie bestimmen die Dichte des Elektrolyten, der als Ionenleiter zwischen den Polplatten vorgesehen ist, sie variieren mit der Ladespannung und können als Maß für diese dienen. Typische Werte zwischen geladener und entladener Batterie schwanken bei Bleiakkus (PbO2-H2So4-Pb) zwischen 1,28 Kg/l bis 1,04 Kg/l.

Die Leistungsfähigkeit des Generators steigt mit der Drehzahl. Bei derzeitigen Fahrzeugen bildet der Motorleerlauf etwa ein Drittel der Drehzahlhäufigkeiten des Generators. Die Abgabeleistung des Generators wird mittels des Erregerstroms gesteuert. Die Funktion der Stromabgabe über die Drehzahl verläuft gekrümmt. Diese so genannte Maximalstromkennlinie steigt ab der 0-Ampere-Drehzahl bis zur Leerlaufdrehzahl an, steigt aber dann nur leicht bis zur Höchstdrehzahl um einen Überlastungsschutz zu gewährleisten.

Die Systeme werden mittels eines Generatorreglers, nämlich Standardreglers oder Multifunktionsreglers gesteuert. Standardregler besitzen regelmäßig eine temperaturabhängige Sollwertvorgabe, die bei Kälte höher ausfällt, um die dann erschwerte Batterienachladung zu verbessern. Moderne Multifunktionsregler besitzen eine Schnittstelle welche in gewissen Grenzen eine Feinabstimmung hinsichtlich des Motorbetriebszustandes erlaubt.

Motor-Management-Systeme sind Systeme zur Steuerung des Zünd- und Einspritzsystems, wie beispielsweise die Motronic-Systeme, und übernehmen mikroprozessorgesteuert die Erfassung und Steuerung aktueller Motor-Betriebsdaten. Sie kommunizieren mit anderen Fahrzeugsteuergeräten über das Bussystem CAN. Typische Motorbetriebsdaten sind die Stellung des Fahrpedals, die Zünddaten, die Luftströme, die Drehzahl, die Temperaturen, die Batteriespannung, der Kraftstofffluss, die Fahrgeschwindigkeit, das Drehmoment, die Gemischzahl, die Abgasdaten, etc.

Mit Vorteil kann das erfindungsgemäße Verfahren vorsehen, mit Hilfe einer Datenmaske eine Priorisierung, Filterung und Normierung unterschiedlicher Datenformate durchzuführen. Auf diese Weise bleibt der eigentliche Kernalgorithmus zur Generierung von Steuersignalen für Energieverbraucher oder Energieeinspeiser von modulspezifischen Datenformatkorrekturen frei und damit übersichtlich.

Besonders zweckmäßig ist eine Ausbildung des erfindungsgemäßen Verfahrens, wenn einem Benutzer der zukünftig zeitliche Verlauf des Ladezustandes des Energieakkumulators mitgeteilt wird, insbesondere auf einer Anzeige dargestellt oder akustisch mitgeteilt wird. Der Fahrzeugführer des Kraftfahrzeuges ist so nicht dazu gezwungen, einem System mit erfindungsgemäßem Verfahren blind zu vertrauen und kann sich stets davon überzeugen, dass das von dem Verfahren vorgeschlagene Vorgehen sinnvoll ist.

Die Steuersignale generierende Steuereinheit kann zweckmäßig mit Aktoren in Verbindung stehen, mittels welchen Motorparameter anpassbar sind. Beispielsweise kann eine Steuerung eines automatischen Getriebes hinsichtlich des Drehzahlverhaltens unter Last in der Weise angepasst werden, dass die Antriebsdrehzahl des Generators sich bei Bedarf erhöht. Daneben ist aber auch eine Verbindung von Aktoren mit der Steuereinheit zweckmäßig, die verbrauchsintensive Infotainmentelemente ladezustandsabhängig steuern, beispielsweise bei einem kritischen Ladezustand abschalten. Zusätzliche Optimierung erfährt das erfindungsgemäße Verfahren, wenn die Steuereinheit in der Lage ist, die Energieaufnahme von Energiesenken auf dem geplanten Fahrweg im Voraus zu berechnen, beispielsweise mittels Daten aus einem Navigationssystem und fahrzeugspezifischen Kenndaten eine entsprechende Prognose erstellt.

Besonders zweckmäßig ist eine Integration der erfindungsgemäßen Steuereinheit als Bestandteil in ein Kombiinstrument. Schon heute ist das Kombiinstrument Zielpunkt sämtlicher Informationsflüsse aus dem System Kraftfahrzeug.

Eine bevorzugte Variante der gefundenen Lösung sieht vor, eine Verknüpfung und Bewertung einiger mittels der vorgenannten Vorrichtungen und Verfahren gewonnener Daten im Kombiinstrument durchzuführen, so dass wahlweise, oder automatisch vorbestimmt, eine für das Gesamtsystem Fahrzeug, Fahrweg und Fahrroute optimierte energetische Situation empfohlen, oder erzwungen wird, die dem Energieakkumulator oder der Batterie einen optimierten Be- und Endladezustand bietet.

Vorteilhafte Umsetzung des Verfahrens erfolgt mittels einer erfindungsgemäßen Vorrichtung, die zweckmäßig eine in ein Kombiinstrument eingegliederte Steuereinheit aufweist, wobei die Steuereinheit ein Datenfernübertragungsmodul oder ein Mo tormanagementmodul oder ein Batteriemanagementmodul oder ein Temperaturmodul oder ein Dateneingangsmodul oder eine Filterung oder einen Speicher oder ein Verknüpfungsmodul oder eine drahtlose Verbrauchersteuerung oder eine drahtgebundene Verbrauchersteuerung aufweist.

Im Folgenden ist die Erfindung anhand eines speziellen Ausführungsbeispiels unter Bezugnahme auf eine Zeichnung zur Verdeutlichung ohne Einschränkung auf das Beispiel näher erläutert. Es zeigt:

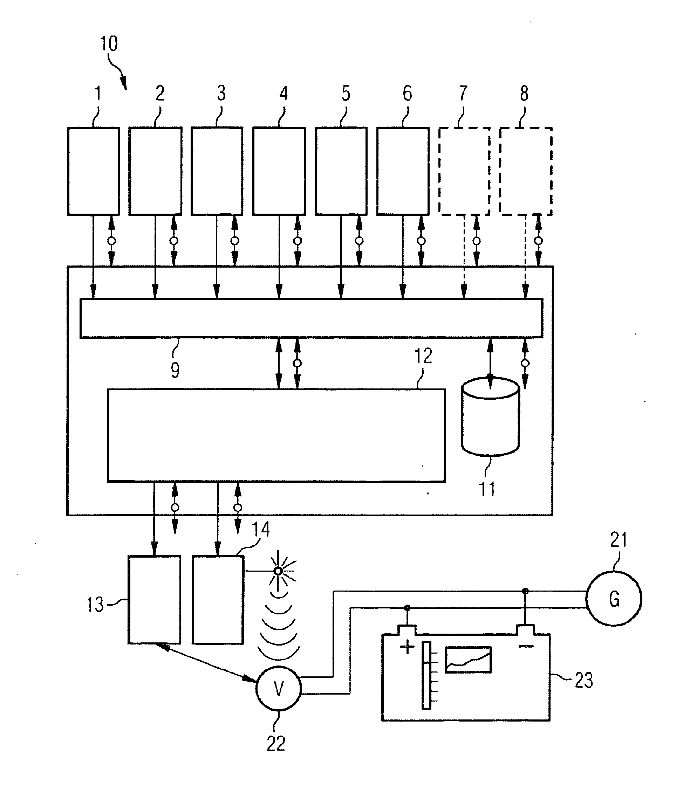

Figur 1: eine Systemskizze einer nach dem erfindungsgemäßen Verfahren arbeitenden Vorrichtung.

Die Figur 1 stellt die Datenflüsse von Eingangs- und Ausgangsparametern 1 bis 8 dar, wobei im Folgenden die Eingangs- und Ausgangsparameter 1 bis 6 im Einzelnen erläutert sind und die Eingangs- und Ausgangsparameter 7 bis 8 stellvertretend für weitere, ggf. nicht stets mit einer Belegung versehene Kanäle dargestellt sind.

Im Wesentlichen besteht eine erfindungsgemäße Steuereinheit 10 zur Steuerung von Energiequellen 21 oder Energiesenken 22 an einem Energieakkumulator 23 aus den Eingangs- und Ausgangsmodulen 1 bis 8, einer Filterung 9 zur Anpassung, Vereinheitlichung und Normierung von Datenformaten aus den bzw. für die Eingangs- und Ausgangsmodule 1 bis 8, einem Verknüpfungsmodul 12, einem Speicher 11, einer drahtlosen Verbrauchersteuerung 13 und einer drahtgebundenen Verbrauchersteuerung 14. Sämtliche der vorgenannten Module 1 bis 14 weisen eine zu einem bidirektionalen Datenfluss fähige Verbindung zu dem verbundenen Nachbarmodul auf, wobei die Eingangs- und Ausgangsmodule 1 bis 8 jeweils mit der Filterung 9 in Verbindung stehen, die Filterung 9 mit dem Speicher 11 und dem Verknüpfungsmodul 12 verbunden ist, und das Verknüpfungsmodul 12 eine entsprechende Anbindung an die Verbrauchersteuerungen 13, 14 aufweist. Der bidirektionale Datenfluss ist in Figur 1 mittels eines Doppelpfeils, welcher ein zentral angeordnetes Kreissymbol aufweist, dargestellt. Daneben ist jeweils ein unidirektionaler Aufruf eines Moduls mittels eines benachbart verbundenen Moduls durch einen einfachen Pfeil symbolisiert. Die Eingangs- und Ausgangsmodule 1 bis 8 rufen im Falle bereitgestellter Daten bzw. Messdaten die Filterung 9 über einen nicht dargestellten Bus auf. Die Filterung 9 startet einen Aufruf oder wird aufgerufen von den Modulen verknüpfungsmodul 12 und Speicher 11. Das Verknüpfungsmodul 12 ruft bei Bedarf die Verbrauchersteuerungen 13 oder 14 auf.

Der Energieakkumulator 1 ist als passive Energiequelle, nämlich als Batterie ausgebildet. Die an die Filterung 9 zu übermittelnden Daten sind Informationen eines Batterie-Managementsystems, Temperaturen der Batterie und chemische Daten.

Die Energiequelle 2 bzw. der Generator 21, der in Figur 1 zur Vereinfachung nochmals in der Verschaltung von Generator 21, Energieakkumulator 23 und Verbraucher 22 dargestellt ist, umfasst sämtliche aktiven Energiequellen, nämlich Lichtmaschinen, Generatorregler, Solarkollektoren oder externe an das Fahrzeug angeschlossene Stromversorgungen.

Aus einer Datenfernübertragung 3 werden der Filterung 9 Daten übermittelt, die dem Verfahren zur Bestimmung und zum Abgleich einer für die Be- und Entladung der Batterie günstigen Fahrsituation oder Fahrroute dienen. Es werden der Ladezustand und Ladezeitprognosen an ein Wap-Log-System übermittelt, welches auf Basis dieser Daten eine optimierte Fahrtroute an das erfindungsgemäße System zurück übermittelt.

Ein Motormanagementmodul 4 übermittelt an die Filterung 9 Parameter des Zündsystems und des Einspritzsystems, insbesondere Motortemperaturen und Drehzahl. Mittels dieser Daten erkennt das System, ob der Fahrer oder die Fahrzeugsteuerung zu einer höheren Drehzahl zu veranlassen ist, damit der Generator 21 einen höheren Ladestrom liefert.

Ein Batteriemanagementmodul 5 liefert der Filterung 9 Informationen betreffend das elektronische Batteriemanagement, insbesondere Wärmemanagement. Hierbei handelt es sich im Wesentlichen um die Temperaturdaten des Energieakkumulators 1, wobei eine für den Energieakkumulator 1 günstige Betriebstemperatur hergestellt wird.

Ein Temperaturmodul 6 versorgt die erfindungsgemäße Steuereinheit 10 über die Filterung 9 mit Daten betreffend die Temperaturen des Motorraumes, des Motors und der äußeren Umgebung.

Die Filterung 9 umfasst eine Datenmaske, die die Daten aus den Modulen 1 bis 8 priorisiert, hinsichtlich des Datenformates anpasst und filtert. Daneben werden in der Filterung 9 vorab Informationen hinsichtlich ihrer Bedeutung für Fahrer, Fahrweg, Fahrzeug, Energiequellen und Energiesenken bewertet und gewichtet, damit eine möglichst kurze Bearbeitungszeit in dem Verknüpfungsmodul 12 erreichbar ist.

Zwischenzuspeichernde Daten werden in einem Speicher 11 temporär oder dauerhaft abgelegt, so dass sie bei Bedarf kurzfristig für den Programmablauf zur Verfügung stehen.

In dem Verknüpfungsmodul 12 werden die Informationen der Datenmaske mit Priorisierung und Filterung 9 und die Daten des Speichers 11 verknüpft und kalkuliert, so dass die Ergebnisse anschließend wieder im Modul zur Priorisierung und Filterung 9 weiterverarbeitet und aufbereitet werden können.

Im weiteren Verfahrensablauf werden die oben beschriebenen einzelnen Steuerungs- und Messeinheiten, wie beispielsweise ein Generatorregler, elektronische Batteriewärme- Management-systeme, Temperatursensoren für Batterie und Motorraum, Säuredichtemesser für Batterien, Sensoren und Aktoren für Energiequellen und Energiesenken, Routenplaner, Detektoren zur Erfassung von Systemkennlinien, Systeme zur Steuerung des Zünd- und Einspritzsystems und Systeme zur Steuerung logistischer Abläufe im PKW- und Nutzfahrzeugverkehr über die Eingangs und Ausgangsmodule 1 bis 6 angewiesen, so dass sie dann mittels automatischer Steuerung oder durch den Fahrer einer Manipulation, wie Aktivierung, Senkung der Drehzahl, Zuschaltung einer zweiten Starterbatterie, Angabe einer energetisch günstigen Fahrtroute, Aufheizen der Batterie, Zuschaltung oder Abschaltung weiterer Energiequellen, Dimmen der Beleuchtung, verbrauchsbezogene Steuerung intelligenter Scheinwerfer, teilweises Abschalten einzelner Infotainmentelemente, etc. unterworfen werden können. Das Modul 13 dient der Steuerung nicht näher spezifizierter Energiesenken 22 bzw. Verbraucher über eine drahtlose Verbindung, mittels einfacher Statusinformation vom Verbraucher und einfachen Direktiven zum erlaubten, energetisch optimalen Energieverbrauch.

Modul 14 steuert drahtgebunden nicht näher spezifizierte Energiesenken 22 bzw. Verbraucher durch Bereitstellung eines digitalen Ein/Aus - Steuersignals.

Das Ausführungsbeispiel sieht eine Manipulation der verbrauchsbezogenen Steuerung verschiedener Energiesenken 22 bzw. Verbraucher vor, was im Detail für "intelligente Scheinwerfer" im Folgenden näher erläutert wird. "Intelligente" Scheinwerfer, die das derzeit experimentell eingesetzte Advanced-Frontlightning-System nutzen, sind in der Lage mittels eines Steuergerätes auch die Leistungsversorgung der Lampen zu übernehmen. Dieser Scheinwerfer ist mit dem CAN-BUS des Fahrzeuges verbunden. Mittels Linsen-, Spiegel-, oder DMD-(Digital-Micro-Mirror-Device)-Einsatz kann eine in Intensität und Richtung gezielte Strahlführung des Frontscheinwerfers durchgeführt werden. Die Leistung und Strahlführung werden in einer Weise gesteuert, dass ein optimaler Ladezustand erreicht wird. Zur Vermeidung von Beeinträchtigungen der Fahrsicherheit aufgrund mangelnder Ausleuchtung der Fahrbahn können mittels Eingriffen in die Motorsteuerung notwendige Einschränkungen, beispielsweise durch Reduktion der Maximalgeschwindigkeit, bewirkt werden.

## Patentansprüche

1. Verfahren zur Steuerung von Energiequellen (21) oder Energiesenken (22) an einem Energieakkumulator (1) in einem Kraftfahrzeug,
wobei mindestens ein den Ladezustand des Energieakkumulators (1) charakterisierender Parameter gemessen wird, wobei der den Ladezustand des Energieakkumulators (1) charakterisierende Parameter an eine Steuereinheit (10) übermittelt wird,
wobei die Steuereinheit (10) in Abhängigkeit von dem den Ladezustand des Energieakkumulators (1) charakterisierenden Parameter mindestens ein Steuersignal generiert, welches direkt oder indirekt mit dem Energieakkumulator (1) verbundene Energiesenken (22) oder Energiequellen (21) hinsichtlich ihrer aus dem Energieakkumulator (1) aufgenommenen oder an den Energieakkumulator (1) abgegebenen Leistung steuert, **dadurch gekennzeichnet, dass** die Steuereinheit (1) die Energieaufnahme von Energiesenken (1) auf einem geplanten Fahrweg im Voraus berechnet.

2. Verfahren nach Anspruch 1, **dadurch gekennzeichnet, dass** die Steuereinheit (10) das Steuersignal in der Weise zur Steuerung der Energiequellen (21) oder Energiesenken (22) generiert, dass der Energieakkumulator (1) eine positive Energiebilanz in definierter Zeiteinheit oder eine positive Leistungsbilanz aufweist.

3. Verfahren nach mindestens einem der vorhergehenden Ansprüche, **dadurch gekennzeichnet , dass** die Steuerung Messungen und/oder Kenngrößen von den elektrischen Eigenschaften des Energieakkumulators (1) und/oder
- Generatorströmen und/oder
- Säurewerten des Energieakkumulators und/oder
- der Motordrehzahl und/oder
- der Motortemperatur und/oder
- der Energieakkumulatortemperatur und/oder
- der Umgebungstemperatur und/oder
- der dynamischen Systemkennlinie, insbesondere des Energieakkumulators und/oder
- Zünddaten der Motorzündung und/oder
- Einspritzsystemdaten und/oder
- Daten des Motroniksystems und/oder
- Daten von mit dem Motroniksystem verwandter Systeme und/oder
- Motorbetriebsdaten und/oder
- Daten der Dauerverbraucher und/oder
- Daten von Langzeitverbrauchern und/oder
- Daten von Kurzzeitverbrauchern und/oder
- Daten von Ladespannungen und/oder
- GPS-Daten und/oder
- Daten von Routenplanern und/oder
- Daten von Wap-Log-Systemen und/oder
- Daten von mit Wap-Log-Systemen verwandter Systeme abruft und in vollständiger oder teilweiser Abhängigkeit von diesen Daten das Steuersignal generiert.

4. Verfahren nach mindestens einem der vorhergehenden Ansprüche, **dadurch gekennzeichnet, dass** eine Datenmaske eine Priorisierung, Filterung (9) und Normierung unterschiedlicher Datenformate durchführt.

5. Verfahrens nach mindestens einem der vorhergehenden Ansprüche, **dadurch gekennzeichnet, dass** einem Benutzer der zukünftig zeitliche Verlauf des Ladezustands des Energieakkumulators (1) mitgeteilt wird, insbesondere auf einer Anzeige dargestellt oder akustisch mitgeteilt wird.

6. Verfahren nach mindestens einem der vorhergehenden Ansprüche, **dadurch gekennzeichnet, dass** die Steuereinheit (10) mit Aktoren in Verbindung steht, mittels welchen Motorparameter anpassbar sind.

7. Verfahren nach mindestens einem der vorhergehenden Ansprüche, **dadurch gekennzeichnet, dass** die Steuereinheit (1) mit Aktoren in Verbindung steht, mittels welchen die Leistungsaufnahme von Infotainmentelementen oder einer inneren oder äußeren Beleuchtung des Fahrzeugs steuerbar ist.

8. Vorrichtung zur Steuerung von Energiequellen (21) und Energiesenken (22), gemäß dem Verfahren nach mindestens einem der vorhergehenden Ansprüche, **dadurch gekennzeichnet, dass** die Steuereinheit (10) Bestandteil eines Kombiinstrumentes ist, welches auch den wesentlichen Teil der Fahrzeuginstrumentierung umfasst und die Steuereinheit (1) derart ausgebildet ist, dass sie die Energieaufnahme von Energiesenken (1) auf einem geplanten Fahrweg im Voraus berechnet.

9. Vorrichtung nach Anspruch 8, **dadurch gekennzeichnet, dass** die Steuerungseinheit (10) ein Datenfernübertragungsmodul aufweist.

10. Vorrichtung nach mindestens einem der vorhergehenden Ansprüche 9, 10 , **dadurch gekennzeichnet, dass** die Steuerungseinheit (10) ein Motormanagementmodul aufweist.

11. Vorrichtung nach mindestens einem der vorhergehenden Ansprüche 8 bis 10, **dadurch gekennzeichnet, dass** die Steuerungseinheit (10) ein Batteriemanagementmodul aufweist.

12. Vorrichtung nach mindestens einem der vorhergehenden Ansprüche 8 bis 11, **dadurch gekennzeichnet, dass** die Steuerungseinheit (10) ein Temperaturmodul aufweist.

13. Vorrichtung nach mindestens einem der vorhergehenden Ansprüche 8 bis 12, **dadurch gekennzeichnet, dass** die Steuerungseinheit (10) ein Dateneingangsmodul aufweist.

14. Vorrichtung nach mindestens einem der vorhergehenden Ansprüche 8 bis 13, **dadurch gekennzeichnet, dass** die Steuerungseinheit (10) eine Filterung (9) aufweist.

15. Vorrichtung nach mindestens einem der vorhergehenden Ansprüche 8 bis 14, **dadurch gekennzeichnet, dass** die Steuerungseinheit (10) einen Speicher (11) aufweist.

16. Vorrichtung nach mindestens einem der vorhergehenden Ansprüche 8 bis 15, **dadurch gekennzeichnet, dass** die Steuerungseinheit (10) ein Verknüpfungsmodul (12) aufweist.

17. Vorrichtung nach mindestens einem der vorhergehenden Ansprüche 8 bis 16, **dadurch gekennzeichnet, dass** die Steuerungseinheit (10) eine drahtlose Verbrauchersteuerung (13) aufweist.

18. Vorrichtung nach mindestens einem der vorhergehenden Ansprüche 8 bis 17, **dadurch gekennzeichnet, dass** die Steuerungseinheit (10) eine drahtgebundene Verbrauchersteuerung (14) aufweist.

## Claims

1. Method for controlling energy sources (21) or energy sinks (22) on an energy accumulator (1) in a motor vehicle, in which case at least one parameter which characterizes the state of charge of the energy accumulator (1) is measured,
in which case the parameter which characterizes the state of charge of the energy accumulator (1) is transmitted to a control unit (10),
in which case the control unit (10) generates at least one control signal as a function of the parameter which is characteristic of the state of charge of the energy accumulator (1), which control signal controls energy sinks (22) or energy sources (21) which are connected directly or indirectly to the energy accumulator (1), in terms of the power which they consume from the energy accumulator (1) or the power which they emit to the energy accumulator (1), **characterized in that** the control unit (1) calculates the energy consumption of energy sinks (1) on a planned route in advance.

2. Method according to Claim 1, **characterized in that** the control unit (10) generates the control signal in a manner to control the energy sources (21) or energy sinks (22), **in that** the energy accumulator (1) has a positive energy balance in a defined time unit, or a positive power balance.

3. Method according to at least one of the preceding claims, **characterized in that** the controller calls up measurements and/or characteristic variables of the electrical characteristics of the energy accumulator (1) and/or
- generator currents and/or
- acid levels of the energy accumulator and/or
- the engine rotation speed and/or
- the engine temperature and/or
- the energy accumulator temperature and/or
- the ambient temperature and/or
- the dynamic system characteristic, in particular of the energy accumulator, and/or
- ignition data for engine ignition and/or
- injection system data and/or
- data relating to the motronic system, and/or
- data from systems which are related to the motronic system, and/or
- engine operating data, and/or
- data relating to continuous loads and/or
- data from long-term loads, and/or
- data from short-term loads, and/or
- data from charging voltages and/or
- GPS data, and/or
- data from route planners, and/or
- data from wap-log systems, and/or
- data from systems which are related to wap-log systems, and generates the control signal completely or partially as a function of this data.

4. Method according to at least one of the preceding claims, **characterized in that** a data mask carries out prioritization, filtering (9) and normalization of different data formats.

5. Method according to at least one of the preceding claims, **characterized in that** the future time profile of the state of charge of the energy accumulator (1) is signaled to a user, in particular being indicated on a display or signaled acoustically.

6. Method according to at least one of the preceding claims, **characterized in that** the control unit (10) is connected to actuators by means of which engine parameters can be adapted.

7. Method according to at least one of the preceding claims, **characterized in that** the control unit (1) is connected to actuators, by means of which the power consumption of infotainment elements or of internal or external vehicle illumination can be controlled.

8. Apparatus for controlling energy sources (21) and energy sinks (22), according to the method according to at least one of the preceding claims, **characterized in that** the control unit (10) is a component of a combination instrument which also comprises the major part of the vehicle instrumentation and the control unit (1) is designed in such a way that it calculates the energy consumption of energy sinks (1) on a planned route in advance.

9. Apparatus according to Claim 8, **characterized in that** the control unit (10) has a remote data transmission module.

10. Apparatus according to at least one of the preceding Claims 9, 10, **characterized in that** the control unit (10) has an engine management module.

11. Apparatus according to at least one of the preceding Claims 8 to 10, **characterized in that** the control unit (10) has a battery management module.

12. Apparatus according to at least one of the preceding Claims 8 to 11, **characterized in that** the control unit (10) has a temperature module.

13. Apparatus according to at least one of the preceding Claims 8 to 12, **characterized in that** the control unit (10) has a data input module.

14. Apparatus according to at least one of the preceding Claims 8 to 13, **characterized in that** the control unit (10) has a filter (9).

15. Apparatus according to at least one of the preceding Claims 8 to 14, **characterized in that** the control unit (10) has a memory (11).

16. Apparatus according to at least one of the preceding Claims 8 to 15, **characterized in that** the control unit (10) has a logic module (12).

17. Apparatus according to at least one of the preceding Claims 8 to 16, **characterized in that** the control unit (10) has a wire-free load controller (13).

18. Apparatus according to at least one of the preceding Claims 8 to 17, **characterized in that** the control unit (10) has a wire-based load controller (14).

## Revendications

1. Procédé permettant de contrôler des sources d'énergie (21) ou des puits d'énergie (22) sur un accumulateur d'énergie (1) dans un véhicule automobile,
procédé au cours duquel on mesure au moins un paramètre caractérisant l'état de charge de l'accumulateur d'énergie (1),
procédé au cours duquel le paramètre caractérisant l'état de charge de l'accumulateur d'énergie (1) est transmis à une unité de commande (10),
procédé au cours duquel l'unité de commande (10) génère, en fonction du paramètre caractérisant l'état de charge de l'accumulateur d'énergie (1), au moins un signal de commande qui contrôle, directement ou indirectement, des puits d'énergie (22) ou des sources d'énergie (21), reliés ou reliées à l'accumulateur d'énergie (1), en ce qui concerne la puissance qu'ils tirent de l'accumulateur d'énergie (1) ou qu'elles délivrent à l'accumulateur d'énergie (1),
**caractérisé par le fait que** l'unité de commande (10) calcule au préalable la consommation en énergie de puits d'énergie (22) sur un parcours planifié.

2. Procédé selon la revendication 1, **caractérisé par le fait que** l'unité de commande (10) génère le signal de commande destiné à contrôler les sources d'énergie (21) ou les puits d'énergie (22) de manière telle que l'accumulateur d'énergie (1) a un bilan énergétique positif dans une unité de temps définie ou un bilan positif de puissance.

3. Procédé selon au moins l'une des revendications précédentes, **caractérisé par le fait que** la commande fait appel à des mesures et/ou à des grandeurs caractéristiques des propriétés électriques de l'accumulateur d'énergie (1) et/ou à
- des courants de génératrices et/ou
- des valeurs d'acidité de l'accumulateur d'énergie et/ou
- la vitesse de rotation du moteur et/ou
- la température du moteur et/ou
- la température de l'accumulateur d'énergie et/ou
- la température ambiante et/ou
- la courbe caractéristique dynamique du système, notamment de l'accumulateur d'énergie et/ou
- aux données de l'allumage du moteur et/ou
- aux données du système d'injection et/ou
- aux données du système électronique du moteur et/ou
- aux données de systèmes apparentés au système électronique du moteur et/ou
- aux données de fonctionnement du moteur et/ou
- aux données des consommateurs permanents et/ou
- aux données des consommateurs longue durée et/ou
- aux données des consommateurs temporaires et/ou
- aux données de tensions de charge et/ou
- aux données GPS et/ou
- aux données de planificateurs d'itinéraires et/ou
- aux données de systèmes wap-log et/ou
- aux données de systèmes apparentés à des systèmes wap-log et génère le signal de commande entièrement en fonction ou partiellement en fonction de ces données.

4. Procédé selon au moins l'une des revendications précédentes, **caractérisé par le fait qu'**un masque de saisie de données procède à une affectation de priorité, à un filtrage (9) et à une standardisation des différents formats de données.

5. Procédé selon au moins l'une des revendications précédentes, **caractérisé par le fait que** l'évolution dans le temps future de l'état de charge de l'accumulateur d'énergie (1) est communiquée à un utilisateur, notamment qu'elle est affichée sur un écran ou communiquée d'une façon acoustique.

6. Procédé selon au moins l'une des revendications précédentes, **caractérisé par le fait que** l'unité de commande (10) est en liaison avec des acteurs au moyen desquels les paramètres du moteur peuvent être adaptés.

7. Procédé selon au moins l'une des revendications précédentes, **caractérisé par le fait que** l'unité de commande (10) est en liaison avec des acteurs au moyen desquels il est possible de contrôler la consommation en puissance d'éléments d'infotainment (ou info-spectacle) ou d'un éclairage intérieur ou extérieur du véhicule.

8. Dispositif permettant de contrôler des sources d'énergie (21) ou des puits d'énergie (22) conformément au procédé selon au moins l'une des revendications précédentes, **caractérisé par le fait que** l'unité de commande (10) fait partie d'un instrument combiné, lequel comprend aussi la partie essentielle des instruments du véhicule et que l'unité de commande (10) est conçue de manière telle qu'elle calcule au préalable la consommation en énergie de puits d'énergie (22) sur un parcours planifié.

9. Dispositif selon la revendication 8 **caractérisé par le fait que** l'unité de commande (10) comporte un module de transmission de données.

10. Dispositif selon au moins l'une des revendications précédentes 8 ou 9 **caractérisé par le fait que** l'unité de commande (10) comporte un module de gestion du moteur.

11. Dispositif selon au moins l'une des revendications précédentes 8 à 10 **caractérisé par le fait que** l'unité de commande (10) comporte un module de gestion de la batterie.

12. Dispositif selon au moins l'une des revendications précédentes 8 à 11 **caractérisé par le fait que** l'unité de commande (10) comporte un module de température.

13. Dispositif selon au moins l'une des revendications précédentes 8 à 12 **caractérisé par le fait que** l'unité de commande (10) comporte un module de saisie de données.

14. Dispositif selon au moins l'une des revendications précédentes 8 à 13 **caractérisé par le fait que** l'unité de commande (10) comporte un filtrage (9).

15. Dispositif selon au moins l'une des revendications précédentes 8 à 14 **caractérisé par le fait que** l'unité de commande (10) comporte une mémoire (11).

16. Dispositif selon au moins l'une des revendications précédentes 8 à 15 **caractérisé par le fait que** l'unité de commande (10) comporte un module d'enchaînement logique (12) .

17. Dispositif selon au moins l'une des revendications précédentes 8 à 16 **caractérisé par le fait que** l'unité de commande (10) comporte une commande sans fil (13) des consommateurs.

18. Dispositif selon au moins l'une des revendications précédentes 8 à 17 **caractérisé par le fait que** l'unité de commande (10) comporte une commande câblée (14) des consommateurs.
